# EUROPEAN PATENT SPECIFICATION

(11) **EP 3 602 224 B1**
(45) Date of publication and mention of the grant of the patent: **23.08.2023**
(21) Application number: 18772100.6
(22) Date of filing: 13.03.2018
(51) Int. Cl.: G05D 1/02, A01D 34/00, A01D 75/18, A01D 75/20

(54) **A ROBOTIC WORK TOOL AND A METHOD FOR USE IN A ROBOTIC WORK TOOL COMPRISING A LIFT AND COLLISION DETECTION**
ROBOTISCHES ARBEITSWERKZEUG UND VERFAHREN ZUR VERWENDUNG IN EINEM ROBOTISCHEN ARBEITSWERKZEUG MIT EINEM HEBE- UND KOLLISIONSDETEKTOR
OUTIL DE TRAVAIL ROBOTIQUE ET PROCÉDÉ DESTINÉ À ÊTRE UTILISÉ DANS UN OUTIL DE TRAVAIL ROBOTIQUE COMPRENANT UN DISPOSITIF DE LEVAGE ET DE DÉTECTION DE COLLISION

(30) Priority: 23.03.2017 SE 1750347; 23.08.2017 SE 1751013
(43) Date of publication of application: 05.02.2020
(73) Proprietor: Husqvarna AB, 561 82 Huskvarna (SE)
(72) Inventor: SVENSSON, Mats, 561 44 Huskvarna (SE); SVENSSON, Pär-Ola, 571 97 Forserum (SE); KALLSTRÖM, Fredrik, 561 91 Huskvarna (SE); BJÖRN, Jonathan, 553 24 Jönköping (SE); HJALMARSSON, Anders, 563 93 Gränna (SE)
(86) International application number: PCT/SE2018/050240
(87) International publication number: WO 2018/174777

(56) References cited:
- EP-A1- 2 692 220
- EP-A1- 2 803 255
- EP-A1- 2 816 886
- EP-A1- 3 470 946
- EP-A2- 2 425 700
- EP-A2- 2 687 077
- WO-A1-03/103375
- WO-A1-2013/125992
- WO-A1-2013/125995
- WO-A1-2014/007728
- WO-A1-2015/115954
- WO-A1-2015/115954
- WO-A1-2015/161889
- WO-A1-2016/150510

## Description

### TECHNICAL FIELD

The present disclosure relates to a robotic work tool, such a lawn mower and to a method for improved lift and collision detection to be executed by a robotic work tool.

### BACKGROUND ART

Automated or robotic power tools such as robotic lawnmowers are becoming increasingly more popular. In a typical deployment the robotic work tool may not be aware of objects in the work area, stationary or movable, that the robotic work tool may collide with. Therefore, collision detection is necessary in order to enable the robotic work tool to adapt its operation when a collision is detected, to avoid the robotic work tool from simply stopping in front of the object by trying to push through it.

Likewise, it is important - also from a safety perspective - to detect that a robotic work tool is lifted, so that the operating member or tool, typically a rotating knife of a robotic lawnmower may be turned off to prevent risk of injuring an operator. The lift and collision detection is usually achieved by arranging the cover of the robotic work tool from being movable in relation to the chassis or main body of the robotic work tool. Such arrangements usually comprise a movable or slidable member which movements are monitored and if a movement in an XY plane (the same as that of the surface being worked) is detected a collision is detected. If a movement in a Z direction (normal to the XY plane), a lift is detected.

One prior art arrangement is shown in the patent application published as EP3470946A1 disclosing an autonomously navigating vehicle comprising a sensor (contact-lift sensor) configured to produce an output proportional to displacement between a chassis and the cover and the control unit configured to receives output of the sensor, wherein the control unit is configured to determine whether change of the sensor output per prescribed time period is equal to or greater than the threshold value, count up time period during which change has been determined to be equal to or greater than the threshold value, and compare time period counted up by the time integration unit with prescribed time periods (first prescribed time period and second prescribed time period) and discriminate whether the vehicle has contacted an obstacle or whether the cover has been lifted from the chassis based on the result of the comparison with the prescribed time periods.

One prior art arrangement is shown in the patent application published as WO2015115954A1 disclosing a robotic work tool system comprising a robotic work tool comprising a collision detection sensor, said collision detection sensor comprising a first sensor element and a plurality of second sensor elements, wherein said first sensor element is movably arranged with respect to said plurality of second sensor elements, wherein said robotic work tool is configured to detect that said first sensor element is proximate a peripheral second sensor element and in response thereto determine that a collision has been detected, and detect that said first sensor element is not proximate any peripheral second sensor element and in response thereto determine that a lift has been detected.

One prior art arrangement is shown in the patent application published as EP2816886A1 disclosing a lift detection arrangement in a robotic lawnmower for detecting a lift of a body relative a chassis of the robotic lawnmower is provided. The lift detection arrangement comprises a connection between the chassis and the body. The connection comprises a joystick element arranged to allow a displacement of the body relative the chassis in a collision plane during a collision, and a lift element arranged to provide a flexibility between the chassis and the body in a lift direction during the lift. The lift detection arrangement further comprises a lift sensor configured to detect a displacement over a predetermined threshold of the lift element during the lift by detecting a change in spacing between two sensor parts. One of the two sensor parts is arranged on the lift element and the two sensor parts are arranged to be relatively displaceable only in the lift direction.

However, in these type of conventional arrangements a collision with an object may also give rise to a movement in a Z direction, whereby a lift may be falsely detected.

As a lift detection usually turns off any active member or tool of the robotic work tool, a falsely detected lift will impair the operation of the robotic work tool, which is of course unwanted.

A further drawback of the conventional arrangements is that, in a collision situation, the robotic work tool may respond to a detected collision in a manner that does not improve the situation. Thus, there is a need for improved lift and collision detection for a robotic work tool.

### SUMMARY OF THE DISCLOSURE

It is therefore an object of the present disclosure to provide a robotic work tool that solves or at least mitigates one of the problems of the prior-art. In particular, it is an object of the present disclosure to provide a robotic work tool with accurate determination of lift and collision. A further object of the present disclosure is provide a robotic work tool with improved determination of the orientation of the robotic work tool relative a collision object. Yet a further object of the present disclosure is to provide a robotic work tool that may be realized with few parts and at low cost.

According to the invention, at least one of these objects are met by a robotic work tool according to independent claim 1. Said robotic work tool comprises a chassis, a body and a controller for controlling operation of the robotic work tool. The robotic work tool comprises at least one three-dimensional sensor arrangement for detecting relative movement of the body and the chassis. The sensor arrangement comprises a sensor element arranged in one of the body and the chassis and a detection element arranged in the other of the body and the chassis. The controller is configured to receive sensor input indicating relative movement of the sensor element and the detection element and to determine, from the sensor input, whether a collision or a lift has been detected.

A three-dimensional sensor arrangement may differentiate a change in relative position of the detection element and the sensor element in lateral direction from a changes of their relative position in vertical direction. The use of a three-dimensional sensor in the robotic work tool according to the invention therefore results in that the controller is configured to accurately determine from the sensor output whether the robotic work tool has been subjected to a collision (lateral movement of the body) or a lift (vertical movement of the body). This in, turn results in effective operation of the robotic work tool since false alarms essentially are avoided. The robotic work tool may further be produced at a low cost since only one sensor arrangement is necessary for detection of collision or lift.

According to an embodiment, said sensor element may be configured to sense the position of the detection element in three dimensions.

According to the invention, the detection element is a magnet and the sensor element is a three-dimensional sensor configured to detect magnetic field in a plane, and in a direction which is normal to the plane.

According to the invention, said detection element is a magnet and the sensor element is configured to detect the magnitude and direction in three-dimensional space of the magnetic field of the magnet. The sensor element is be a three-dimensional Hall sensor.

According to an embodiment, said the sensor element may be configured as an integrated unit, and preferably encapsulated in a single integrated circuit package. Such an integrated circuit package may be soldered to a printed circuit board.

According to an embodiment, the three-dimensional sensor arrangement may be positioned, as seen from above, at a distance from a geometrical centre of the robotic work tool, and preferably adjacent to a lateral side of the robotic tool. Thereby, a particularly efficient collision detection may be obtained in situations when the robotic work tool does not collide head-on.

According to an embodiment, the controller may be configured to receive sensor input indicating lateral movement of the sensor element and the detection element relative each other, and in response thereto, determine that a collision has been detected.

According to an embodiment, said at least one three-dimensional sensor arrangement may comprise a first and a second three-dimensional sensor arrangement, each of said sensor arrangements comprising a respective sensor element arranged in one of the body and the chassis and a respective detection element arranged in the other of the body and the chassis. Also in this case, a particularly efficient collision detection may be obtained in situations when the robotic work tool does not collide head-on. Each of said first and second three-dimensional sensor arrangements may optionally be configured in accordance with any of the embodiments hereinabove.

According to an embodiment, the controller may be configured to determine, from the sensor input, the direction of the collision.

According to an embodiment, the controller may be configured to receive sensor input indicating vertical movement of a sensor element and a detection element relative each other, and in response thereto, determine that a lift has been detected.

According to an embodiment, the controller may be configured to receive sensor input indicating lateral and vertical movement of a sensor element and a detection element relative each other and, in response thereto, determine whether collision or lift has been detected by comparing sensor input with a threshold value.

According to an embodiment, the robotic work tool may comprising at least one suspension device for movably supporting the body on the chassis. The suspension device may comprise an elongate, optionally rigid, support member having a first end that is supported on the chassis and a second end that supports the body. The elongate support member may be extendable and pivotal such that the body may move laterally and vertically relative the chassis.

According to an embodiment, the first end of the elongate support member may be configured to be pivotally supported on the chassis. The second end of the elongate support member may be joined to the body.

According to an embodiment, the elongate support member may comprise a base member and a lift member, respectively configured such that at least a portion of one of the base member and the lift member is slidably receivable in the other of the base member and the lift member, so that the elongate support member may be extended telescopically.

According to an embodiment, the elongate support member may comprise a first biasing element arranged to bias the lift member towards the base member.

According to an embodiment, the base member may comprise an elongate guide opening. The first biasing element may be arranged in the base member, and may comprise a guide element that extends through the elongate guide opening and is attached to the lift member.

According to an embodiment, the suspension device may comprise a second biasing element arranged to bias the elongate support member from a pivoted position to an upright position.

According to an embodiment, said three-dimensional sensor arrangement or arrangements, as the case may be, and the at least one suspension device, may be arranged laterally separated from each other.

According to an embodiment, the robotic work tool may comprise at least a first and a second suspension device.

According to an embodiment, the number of suspension devices may be greater than the number of three-dimensional sensor arrangements.

According to an embodiment, the robotic work tool may comprise at least a first and a second suspension device. A three dimensional sensor arrangement according to any of the embodiments defined hereinabove may be arranged between the first and the second suspension device.

According to an embodiment, the robotic work tool may be a robotic lawnmower.

According to the invention, there is provided a method for use in a robotic work tool as defined in independent claim 12.

Further embodiments of the method are provided by combining, wherever possible, the method with features of any of the embodiments defined hereinabove with reference to a robotic work tool.

### BRIEF DESCRIPTION OF THE DRAWINGS

Figure 1: A schematic drawing of a robotic work tool according to an embodiment of the present disclosure.
Figure 2: A schematic drawing of a robotic work tool system according to an embodiment of the present disclosure.
Figure 3: A schematic perspective drawing of a robotic work tool according to an embodiment of the present disclosure.
Figure 4: A cross-sectional view of a portion of the robotic work tool of figure 3.
Figure 5a, 5b: Schematic drawings showing the three-dimensional sensor arrangement of the robotic work tool according to the present disclosure during collision and lift, respectively.
Figure 6: A flowchart for a method according to the present disclosure.
Figure 7a - 7c: Schematic, cross-sectional drawings of a suspension device of the robotic work tool according to the present disclosure.
Figure 8: A schematic drawing of an arrangement of suspension devices and three-dimensional sensor arrangements in a robotic work tool according to the present disclosure.

### DETAILED DESCRIPTION OF EMBODIMENTS

The robotic work tool according to the present disclosure will now be described more fully hereinafter. The robotic work tool according to the present disclosure may however be embodied in many different forms and should not be construed as limited to the embodiments set forth herein. Rather, these embodiments are provided by way of example so that this disclosure will be thorough and complete, and will fully convey the scope of the present disclosure to those persons skilled in the art. Same reference numbers refer to same elements throughout the description.

It is appreciated that while the description given herein will be focused on robotic lawnmowers, the teachings herein may also be applied to robotic cleaners such as robotic vacuum cleaners and/or robotic floor cleaners, robotic ball collectors, robotic mine sweepers, robotic farming equipment, or other robotic work tools to be employed in a work area defined by a boundary cable.

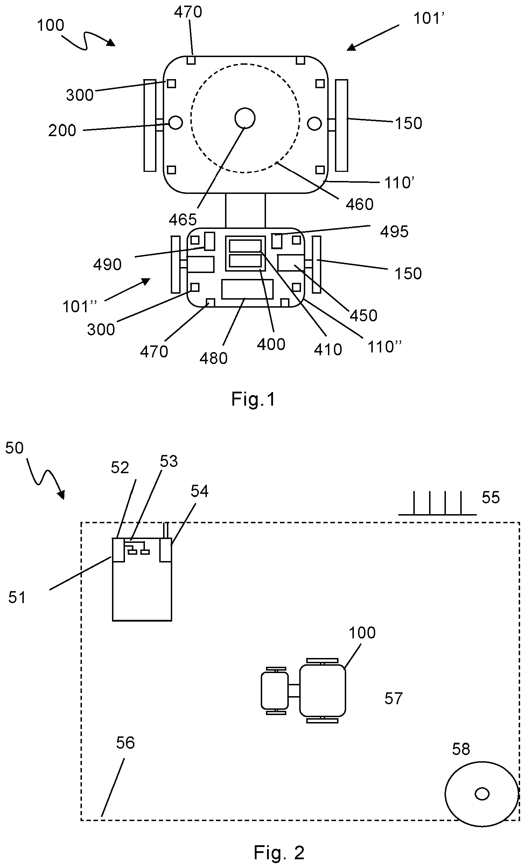

Figure 1 shows a schematic overview of the robotic working tool 100, which is exemplified by a robotic lawnmower 100, having a front carriage 101' and a rear carriage 101". The robotic lawnmower 100 comprises a chassis 110 which in the embodiment shown in figure 1 comprises a front chassis 110' of the front carriage 101' and a rear chassis 110" of the rear carriage 101". The robotic lawnmower 100 further comprises a body (not shown) which may comprise a front body (not shown) of the front carriage 101' and a rear body (not shown) of the rear carriage 101". The robotic lawnmower 100 comprises two pair of wheels 150. One pair of front wheels 150 is arranged in the front carriage 101' and one pair of rear wheels 150 is arranged in the rear carriage 101". At least some of the wheels 150 are drivably connected to at least one electric motor 450. It is appreciated that while the description herein is focused on electric motors, combustion engines may alternatively be used possibly in combination with an electric motor.

In the example of figure 1, each of the rear wheels 150 is connected to a respective electric motor 450. This allows for driving the rear wheels 150 independently of one another which, for example, enables steep turning.

The robotic lawnmower 100 also comprises a controller 400, which may be arranged in the rear carriage 101" as shown in figure 1. The controller 400 may be implemented using instructions that enable hardware functionality, for example, by using executable computer program instructions in a general-purpose or special-purpose processor that may be stored on a computer readable storage medium (disk, memory etc.) 410 to be executed by such a processor. The controller 400 is configured to read instructions from the memory 410 and execute these instructions to control the operation of the robotic lawnmower 100 including, but not being limited to, the propulsion of the robotic lawnmower. The controller 400 may be implemented using any suitable, publically available processor or Programmable Logic Circuit (PLC). The memory 410 may be implemented using any commonly known technology for computer-readable memories such as ROM, RAM, SRAM, DRAM, FLASH, DDR, SDRAM or some other memory technology.

The robotic work tool 100 may further have at least one boundary sensor 470. In the example of figure 1 there are four boundary sensors 470. Two boundary sensors 470 are arranged in the front part of the front carriage 101' and two boundary sensors 470 are arranged in the rear part of the rear carriage 101". The boundary sensors 470 are configured to detect a magnetic field (not shown) and for detecting a boundary cable and/or for receiving (and possibly also sending) information from a signal generator (will be discussed with reference to figure 2).

In some embodiments, the boundary sensors 470 may be connected to the controller 400, and the controller 400 may be configured to process and evaluate any signals received from the boundary sensor 470. The sensor signals may be caused by the magnetic field being generated by a control signal being transmitted through a boundary cable. This enables the controller 400 to determine whether the robotic lawnmower 100 is close to or crossing a boundary cable, or inside or outside an area enclosed by the boundary cable. This also enables the robotic lawnmower 100 to receive (and possibly send) information from the control signal.

The robotic lawnmower 100, may comprise a grass cutting device 460, such as a rotating blade driven by a cutter motor 465. The grass cutting device 460 being an example of a work tool 460 for a robotic work tool 100. In the embodiment of figure 1 the grass cutting device 460 and the cutter motor 465 are arranged in the front carriage 101. The cutter motor 465 is connected to the controller 400 which enables the controller 400 to control the operation of the cutter motor 465. The controller 400 may also be configured to determine the load exerted on the rotating blade, by for example measure the power delivered to the cutter motor 465 or by measuring the axle torque exerted by the rotating blade. The robotic lawnmower 100 also has (at least) one battery 480 for providing power to the motors 450 and the cutter motor 465.

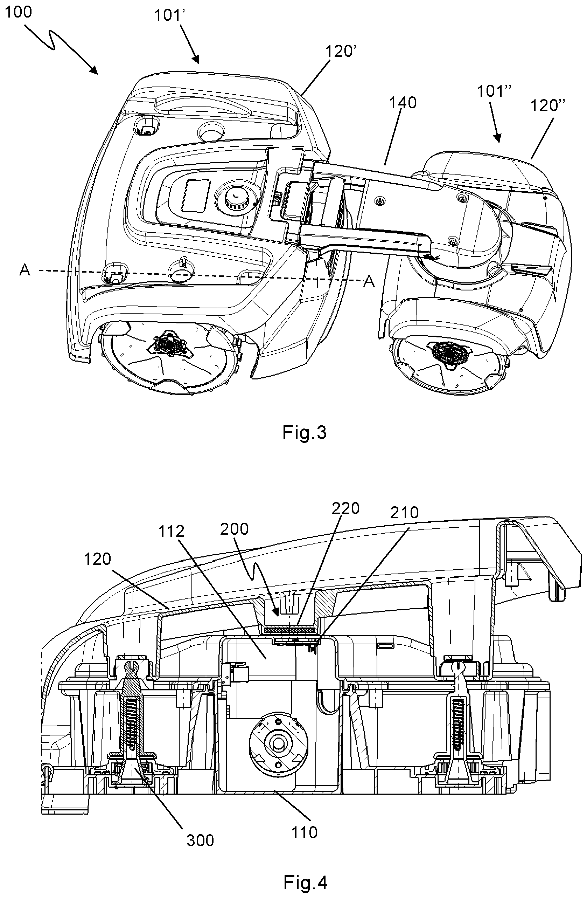

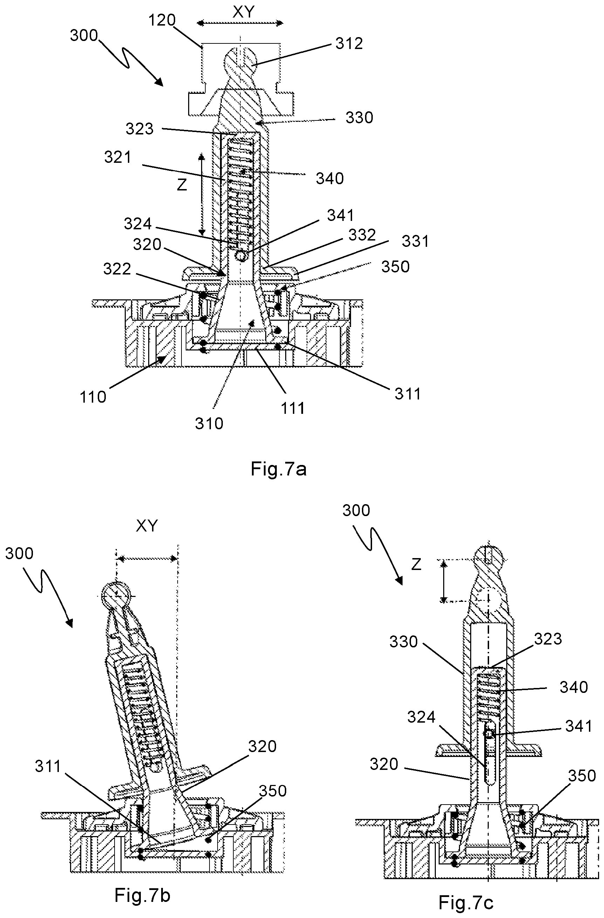

The robotic lawnmower 100 is also arranged with at least one suspension device 300 which will be described in greater detail with reference to figures 7a - 7c. In the example of figure 1, both the front carriage 101' and the rear carriage 101" are provided with suspension devices 300, e.g. four suspension devices 300 respectively. The robotic lawnmower 100 is also arranged with at least one three-dimensional sensor arrangement 200, which will be described in detail under figure 4. In figure 1 at least one three-dimensional sensor arrangement is provided in each of the front carriage 101 and the rear carriage 101'. The three-dimensional sensor arrangement 200 is connected to the controller 400, and the controller 400 may be configured to process and evaluate any signals received from the three-dimensional sensor arrangement 200.

Figure 2 shows a schematic view of a robotic work tool system 50 in one embodiment. The schematic view is not to scale. The robotic work tool system 50 comprises a charging station 51 and a boundary cable 56 arranged to enclose a work area 57, in which the robotic work tool e.g. a robotic lawnmower 100 is supposed to serve.

As in figure 1, the robotic work tool 100 is exemplified by a robotic lawnmower, but the teachings herein may also be applied to other robotic work tools adapted to operate within a work area.

The charging station 51 may have a base plate (not shown) for enabling the robotic lawnmower to enter the charging station 51 in a clean environment and for providing stability to the charging station 51.

The charging station 51 has a charger 52, that may be coupled to two charging plates 53. The charging plates 53 are arranged to co-operate with corresponding charging plates (not shown) of the robotic lawnmower 100 for charging the battery 480 of the robotic lawnmower 100.

The charging station 51 also has, or may be coupled to, a signal generator 54 for providing a control signal 55 to be transmitted through the boundary cable 56. The signal generator thus comprises a controller for generating the control signal. The control signal 55 comprises an alternating current, such as a continuously or regularly repeated current signal. The control signal may be a CDMA signal (CDMA - Code Division Multiple Access). The control signal may also or alternatively be a pulsed control signal, the control signal thus comprising one or more current pulses being transmitted periodically. The control signal may also or alternatively be a continuous sinusoidal wave. As is known in the art, the current signal will generate a magnetic field around the boundary cable 56 which the boundary sensors 470 of the robotic lawnmower 100 will detect. As the robotic lawnmower 100 (or more accurately, the boundary sensor 470) crosses the boundary cable 56 the direction of the magnetic field will change. The robotic lawnmower 100 will thus be able to determine that the boundary cable has been crossed, and take appropriate action by controlling the driving of the rear wheels 150 to cause the robotic lawnmower 100 to turn a certain angular amount and return into the work area 57. For its operation within the work area 57, in the embodiment of figure 2, the robotic lawnmower 100 may alternatively or additionally use the satellite navigation device 490, supported by the deduced reckoning navigation sensor 495 to navigate the work area 57.

As can be seen in figure 2, there is one example of an object exemplified as a tree (trunk) 58.

Figure 3 shows a robotic work tool 100 according to an embodiment of the present disclosure in a perspective side view. The robotic work tool 100 comprises a front carriage 101' and a rear carriage 101" which are coupled by a shaft 140 that is rotationally attached to the rear carriage 101" and fixedly attached to the front carriage 101'. The robotic work tool 100 further comprise a body 120 which in the described embodiment is embodied in a front body 120' and a rear body 120" of the respective front carriage 101' and the rear carriage 101". The body 120, which may be made of plastic or metal, forms a protective outer cover or housing of the robotic work tool 100 and protects components, such as the aforementioned motors and controller, that are located within the body 120 or on the chassis 110.

It is appreciated that the present disclosure is not limited to a robotic work tool 100 having separate front and rear carriages 101', 101" as described above. Rather, the robotic work tool 100 may also be of type that comprises one single integral chassis and one single integral body. Therefore, in the following description, when it is not necessary to differentiate between a front and rear carriage, reference will only be made to "chassis 110" or "body 120".

Figure 4 shows a view of a cross-section of the robotic work tool 100 along the line A-A in figure 3. The body 120 is movably supported on the chassis 110 by suspension devices 300 that will be described more in detail under figures 7a - 7c. The body 120 may therefore move laterally relative the chassis 110 when subjected to a collision with an object (not shown) in the surroundings of the robotic work tool. The body may 120 may also move vertically relative the chassis 110 subjected to lift. For example when a person grabs hold of the body 120 and lifts it upwards.

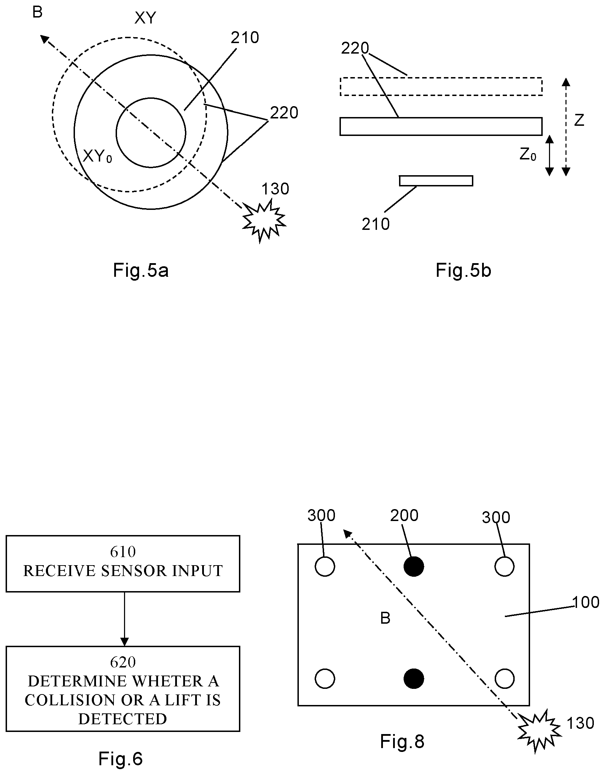

According to the present disclosure, the robotic work tool 100 comprises at least one three-dimensional sensor arrangement 200 for detecting relative movement of the body 120 and the chassis 110. The three-dimensional sensor arrangement 200 comprises a sensor element 210 and a detection element 220. The sensor element 210 may be arranged on, or in, one of the body 120 and the chassis 110. The detection element 220 may be arranged in, or on, the other of the body 120 and the chassis 110. In the embodiment shown in figure 4, the detection element 220 is arranged in the body 120 and the sensor element 210 is arranged in the chassis 110. Preferably, the sensor element 210 is arranged in a water sealed space 112 of the chassis 110 so that it is protected from moisture and contamination. The sensor arrangement 200 is preferably arranged such that the detection element 220 and the sensor element 210 are facing each other in a predetermined default lateral position XY₀ (see figure 5a) when the robotic work tool 100 is not subjected to a collision. The sensor arrangement 200 is further arranged such that detection element 220 and the sensor element 210 are in the predetermined default vertical default position Z₀ (see figure 5b) when the robotic work tool 100 is not subjected to a lift. In the predetermined default vertical default position Z₀, the detection element 220 and the sensor element may be in contact with each other. However preferably, the detection element 220 and the sensor element 210 are spaced apart a predetermined distance from each other in order to reduce wear.

By "relative movement" between sensor element and detection element is meant that either the detection element 220 moves relative the sensor element 210 or that the sensor element 220 moves relative the detection element 210.

The sensor element 210 is configured to sense i.e. detect the position of the detection element 220 in three dimensions. That is, in three spatial dimensions. In detail, the sensor element 210 is configured to sense the lateral position of the detection element 220 relative the sensor element 210. That is, the position of the detection element 220 in a plane XY which is parallel to the sensor element 210. Additionally, the sensor element 210 is configured to sense the vertical position of the detection element 220 relative the sensor element 210. That is, the position of the detection element 220 along a normal between the detection element 220 and the sensor element 210. The sensor element 210 senses continuously or intermittently the position of detection element 220 during operation of the robotic work tool 100, and may thus detect any movement of the detection element 220 relative the sensor element 210.

It is appreciated that the three-dimensional sensor arrangement 200 is integrated. That is, the three-dimensional sensor arrangement 200 is an integrated unit comprising, or consisting of, one sensor element 210 and one detection element 220. It is further appreciated that the sensor element 210 is integrated. Thus, the sensor element 210 is an integrated, preferably single, physical unit configured to detect the position of the detection element 220 in three dimensions. Analogous, also the detection element 220 is an integrated, preferably single, physical unit.

Figure 5a shows schematically the sensor arrangement 200 of figure 4 in view from above. The solid central circle 210 indicates the sensor element 210 and the solid dashed circle 210 indicates the detection element 220 in a lateral default position XY₀ in which the detection element 220 is centred over the sensor element 210. The dashed circle 220 indicates a situation in which the detection element 220 has moved laterally in a plane XY relative sensor element 210. The arrow B indicate the direction of the lateral movement of the detection element 220 relative the sensor element 210. Thus, figure 5a shows a situation in which the body 120 (not shown) of the robotic work tool 100 has been subjected to collision at location 130 on the body 120 and moved laterally in the XY-plane in direction of arrow B away from the location of the collision 130.

Figure 5b shows schematically the sensor arrangement 220 of figure 4 in a side view. The solid box 220 indicates the detection element 220 in a vertical default position Z₀ relative the sensor element 210. The dashed box 220 indicates a situation in which the detection element 220 has moved vertically relative the sensor element 210 along the normal Z due to lifting of body 120 (not shown) of the robotic work tool 100.

The sensor element 210 is preferably a three-dimensional sensor that is configured to detect a magnetic field in a plane or in a direction (e.g. an axis) which is normal to the plane. The three-dimensional sensor element 210 may be a three-dimensional Hall-sensor. For example, the three-dimensional sensor 210 may be TLV493 three-dimensional sensor which is commercially available from the company Infineon Technologies AG. An example of a detection element 220 is a magnet, for example a permanent magnet.

Movement of the detection element 220 relative the sensor element 210 is detected by the three-dimensional sensor element 210 as a change in the magnetic field that is produced by the detection element 220.

The sensor element 210 may detect changes in the magnetic field when the detection element 220 moves laterally, i.e. in the XY-plane relative the sensor element 210.

The sensor element 210 may further detect changes in the magnetic field when the detection element 220 moves vertically relative the sensor element 210, i.e. along the normal Z.

Thus, specific and different changes in the magnetic field produced by the detection element 220 may be detected by sensor element 210 when the detection element 220 moves laterally, respectively vertically, relative the sensor element 210. Specific changes in the magnetic field may for example be changes in the magnitude of the magnetic field. Other specific changes in the magnetic field that may be detected by the sensor element are for example changes in direction or orientation of the magnetic field.

In the following description, the three-dimensional sensor arrangement 200 is exemplified by a three-dimensional sensor 210 that is configured to detect a magnetic field and the detection element 220 is exemplified in the form of a magnet. However, the present disclosure is not limited to three-dimensional sensors that are configured to detect a magnetic field. Rather, other three-dimensional sensor element may be utilized, for example capacitive sensors or force resistance sensors (FSR).

The controller 400 (see figure 1) is connected to the sensor arrangement 200 and configured to receive sensor input indicating movement of the detection element 220 relative the sensor element 210. Thus, as described above, the sensor element 210 continuously or intermittently senses the magnetic field produced by the detection element 220 and outputs a corresponding sensor signal as sensor input to the controller 400.

The controller 400 is further configured to determine from the sensor input whether a collision or a lift has been detected. The controller 400 may thereby be configured to determine from specific changes in the magnetic field produced by the detection element 220 that a collision, respectively a lift, has been detected. The controller 400 may thereby be configured to determine that specific changes in the magnetic field indicates that the detection element 220 has moved laterally relative the sensor element 210 and based thereon determine that a collision is detected. The controller 400 may also be configured to determine that specific changes in the magnetic field indicates that the detection element 220 has moved vertically relative the sensor element 210 and based thereon determine that a lift is detected. The controller 400 may further be configured to operate the robotic work tool (not shown) in dependency of a detected collision or a detected lift. For example, if a collision has been detected, the controller may change the driving path of the robotic work tool. Alternatively, if a lift has been detected, the controller may be configured to switch off the work tool (e.g. the cutter) of the robotic work tool.

The controller 400 may further be configured to determine the direction of movement of the detection element 220 in the XY-plane relative the sensor element 210. In the described embodiment, the controller 400 may thereby be configured to determine that specific changes in the magnetic field indicate that the detection element 220 has moved laterally relative the sensor element 210 in a specific direction. This is advantageous since it allows the controller 400 to operate the robotic work tool very effectively in view of an object in the close surroundings of the robotic work tool.

Namely, the controller 400 may from the collision direction determine the position of the obj ect with which the robotic work tool has collided and change the driving path of the robotic work tool so that the robotic work tool moves away or around the object. In a simple example, the controller 400 may be configured to, in response to a detected collision, steer the robotic work tool 200 in the direction of movement of the detection element 220 and thus away from the object.

The controller 400 may further be configured to determine the amount of lateral and vertical movement of the detection element 220 relative the sensor element 210. In the described embodiment the controller 400 may thereby be configured to determine that specific changes in the magnetic field indicates that the detection element 220 has moved a specific distance laterally away from the lateral default position or vertical away from the vertical default position.

This is advantageous in a situation where the body 120 of the robotic work tool 100 is subjected to simultaneous collision and lift since it makes possible for the controller to prioritize operation of the robotic tool with regards to e.g. a large vertical movement of the body and ignore a small lateral movement of the body. The controller 400 may thereby be configured to compare the amount of lateral and vertical movement of the detection element 220 relative the sensor element 210 with lateral and vertical movement threshold values. The controller 400 may further be configured to determine whether the movement of the detection element 220 relative the sensor element 210 is predominately vertical or predominately lateral. For example, the controller 400 may be configured to determine that movement of the detection element 220 is predominately lateral when the amount of lateral movement of the detection element 220 approximates or exceeds a lateral movement threshold value. Accordingly, the controller 400 may be configured to determine that movement of the detection element 220 is predominately vertical when the amount of lateral movement of the detection element 220 approximates or exceeds a vertical movement threshold value. The controller 400 may further be configured to determine, when the movement of the detection element 220 is predominately vertical, that a lift is detected. Accordingly, the controller 400 may be configured to determine, when the movement of the detection element 220 is predominately lateral, that a collision is detected.

Figure 6 shows a flowchart for a general method according to the present disclosure where the controller 400 receives 610 sensor input from the three-dimensional sensor arrangement indicating relative movement of the sensor element 210 and the detection element 220 and; determines 620, from the control input, whether a collision or a lift has been detected.

Returning to figure 4. The robotic work tool 100 comprises at least one extendable and pivotal suspension device 300 for movably supporting the body 120 on the chassis 110 so that the body 120 may move laterally and vertically relative the chassis 110.

Figure 7a shows the suspension device 300 in detail. Thus, the suspension device 300 comprises an elongate support member 310 which may have rotational symmetric form and that comprises a base member 320 and a lift member 330.

The base member 320 is elongate and has a first end 311, which forms the first end 311 of the elongate support member 310. The base member 320 has further a second end 323 and a stem portion 321 that extends from the second end 323 to a base portion 322 which extends to the first end 311 of the base member 320. The stem portion 321 may have generally uniform cross-section. In the embodiment of figure 7a, the stem portion 321 is hollow and of cylindrical cross-section. The base portion 322 may have a cross-section that widens towards the first end 311. The first end 311 is configured to be pivotally supported on a support surface 111 of the chassis 110. The first end 311 may thereby have a flat end surface which is supported on a corresponding flat support surface 111 on the chassis 110. It appreciated that the first end 311 of the elongated support member 310 is freely supported on the chassis 110. That is, the first end 311 is not permanently joined to the chassis 120. As shown in figure 7b, the flat end surface of the first end 311 allows the elongate support member 310 to pivot when the body 120 of the robotic work tool is subjected to a collision. Instead of a flat end surface, the first end 311 may have a concave or convex end surface which is configured to be pivotally supported on a corresponding convex or concave support surface 111 of the chassis (not shown). The stem portion 321 further comprises at least one elongate guide opening 324 for receiving a guide pin 341 of a biasing element 340 which will be described further hereinafter. In figure 7a only one elongate guide opening 324 is visible. However, two elongate guide openings 324 may be provided opposite to each other in the stem portion 323. The at least one elongate guide opening 324 extends in direction from the base portion 322 towards the second end 323 of the base member 320.

The lift member 330 is also elongate and hollow and comprises a first end 331 with an opening 332 for receiving the stem portion 321 of the base member 320. The lift member 330 further comprises a second end 312, forming the second end 312 of the elongate support member 310. The second end 312 may be supported on the inner surface of the body 120 of the robotic work tool. Preferably, the second end 312 is joined to the body 120. For example by formfitting.

The base member 320 and the lift member 330 are configured such that at least a portion of the base member 320 may be slidably received in the hollow lift member 330. Thus, at least a part of the stem portion 321 of the base member 320 may be received through the opening 332 in the first end 331 in the lift member 330 and thus extend within the hollow lift member 330. The elongate support member 310 may thereby be extended and retracted telescopically by sliding of the lift member 330 on the base member 320 in vertical direction towards or away from the chassis 110 (see figure 7c).

Configuration of the lift member 330 and the base member 320 may be achieved by appropriate selection of geometrical dimensions, such as shape, length and inner- and outer diameter of the base member 320 and the lift member 330. Preferably, at least a part of the stem portion 321 of the base member 320 is cylindrical and at least a portion of the hollow lift member 330 is of corresponding hollow cylindrical cross-section.

The suspension member 300 may further comprise a first biasing element 340 which is arranged to bias, i.e. force, the lift member 330 towards the base member 310. The first biasing element 340 is a resilient member for example a spring, such as helical coil spring, or a helical pressure coil spring. Alternatively, the first biasing element 340 is a resilient member manufactured by elastic material such as a rubber or elastomer. In the embodiment of figure 7a, the biasing element 340 is a helical coil pressure spring and is inserted into the stem portion 321 of the base member 320. A first end of the biasing member 340 is supported onto the second end 323 of the stem portion 321. The second end of the biasing member 340 comprises a guide element 341, for example in the form of a guide pin, that extends through the at least elongated guide opening 324 in the stem portion 321 of the base member 320 and into the lift member 330. The guide element 340 is further fixedly attached to the lift member 330. For example, the end of the guide element 341 (in the form of guide pin) is received in a circular opening in the base member 330 (not shown).

The biasing element 340 and the elongated guide opening 324 in the base member 320 as well as the position of attachment of the guide pin 341 to the lift member 330 are configured such that the biasing element 340 forces the lift member 330, in vertical direction, towards the base member 320 when the suspension device 300 is in a vertical default position. That is, when no lift force is exerted on the lift member 330. Thus, when the suspension device is in a vertical default position, as shown in figure 7a, the biasing element 340 (in the form of a coil pressure spring) is slightly compressed.

This configuration of the suspension device 300 is advantageous since the pre-biased biasing element 340 ensures that the body 120 of the robotic work tool does not move in vertical direction when the robotic work tool runs down a slope. This is further advantageous since any movement of the body 120 of the robotic work tool in vertical direction may be detected as a lift by the controller 400 and result in deactivation of the cutter. An advantage of the elongate guide opening 324 in the base member 320 is that the upper end of the elongated guide opening 324 provides a predetermined stop for movement of the guide element 341 and thus a predetermined stop for lifting of the body 120 of the robotic work tool.

Turning to figure 7c, which show a situation in which the body 120 (not shown) of the robotic work tool is subjected to a lift. This causes the lift member 330 to be pulled vertically upwards away from the base member 320. The guide element 341 thereby runs in the elongated guide opening 324 in the base member 320 and the biasing element 340 is compressed against the second end 323 of the base member 320. When the lifting force on the lift member 330 is released, the biasing element 340 expands, i.e. springs back and forces the lift member 330 in vertical direction towards the base member 320.

The suspension device 300 may further comprise a second biasing element 350 which is arranged to bias, i.e. force, the elongate support member 310 from a pivoted position (as shown in figure 7b) towards an upright position (as shown in figure 7a). The second biasing element 350 may also be a resilient element such as a helical coil spring or a helical pressure coil spring. The second biasing element 350, preferably in the form of a helical coil spring, may be arranged around the outer periphery of the base member 320 and attached by one end to the support surface 111 of the chassis 110.

Figure 8 shows schematically an arrangement of three-dimensional sensor arrangement 200 and suspension devices 300 in a robotic work tool 100. Preferably, the three-dimensional sensor arrangements 200 are arranged laterally separated from the suspension devices 300. This makes possible to reduce the number of three-dimensional arrangements 200 in the robotic work tool. Typically, the suspension devices 300 are arranged in the corners of the robotic work tool 100 (as shown in figure 8). However, the corners of the robotic work tool 100, and thus the suspension devices 300, may be so far spaced apart that lifting of one corner of the robotic work tool not necessarily result in detectable vertical displacement of another corner of body of the robotic work tool. Therefore, if the sensor arrangements 200 are arranged within, or directly above, the suspension devices 300 it may be necessary to have one sensor arrangement in each suspension device 300 to ensure lift detection over the entire robotic work tool. Therefore, by arranging the sensor arrangements 200 laterally spaced apart from the suspension devices 300 it is possible to place at least one or at least two sensor arrangements 200 in positions on the robotic tool 100 that allows lift to be detected regardless which part of the robotic work tool that has been subjected to the lift.

In figure 8 the robotic work tool 100 one three-dimensional sensor arrangement 200 and a first and a second suspension device 300 are arranged in a row. Two such rows are arranged on opposite sides of the robotic work tool and in each row one three dimensional sensor arrangement 200 is arranged between the first and second suspension device 300. This arrangement is advantageous since it allows for a stable collision signal when the body 120 of the robotic work tool is subjected to a collision 130 in diagonal collision direction (as indicated by arrow B). When subjected to a diagonal collision, the body of the robotic work tool 100 may twist which in turn may result in only small movement of the body of the robotic work tool in the XY-plane. However, when the robotic work tool comprises at least two horizontally separated sensors 200, e.g. arranged as in figure 8, at least one sensor 200 will detect the collision even if the movement of the body is small. The arrangement of figure 8 also provides very reliable detection of lift over the entire body of the robotic work tool 100.

## Claims

1. A robotic work tool (100) comprising a chassis (110), a body (120) and a controller (400) for controlling operation of the robotic work tool (100) and at least one three-dimensional sensor arrangement (200) for detecting relative movement of the body (100) and the chassis (110), wherein the sensor arrangement (200) comprises a sensor element (210) arranged in one of the body (120) and the chassis (110) and a detection element (220) arranged in the other of the body (120) and the chassis (110), wherein the controller (400) is configured to:
receive sensor input indicating relative movement of the sensor element (210) and the detection element (220);
determine, from the sensor input, whether a collision or a lift has been detected, wherein the the detection element (220) is a magnet,
the robotic work tool being **characterized in that** the sensor element (210) is a three-dimensional Hall sensor configured to detect the magnitude and direction in three-dimensional space of the magnetic field of the magnet, wherein the controller is configured to determine a direction of movement of the detection element (220) in a plane relative the sensor element (210), the plane being parallel to a surface being worked, and in response thereto determine the position of the object with which the robotic work tool has collided and change the driving path of the robotic work tool so that the robotic work tool moves away from or around the object.

2. The robotic work tool (100) according to claim 1, wherein the sensor element is configured as an integrated unit, and preferably encapsulated in a single integrated circuit package.

3. The robotic work tool (100) according to any of the previous claims, wherein the three-dimensional sensor arrangement is positioned, as seen from above, at a distance from a geometrical centre of the robotic work tool (100), and preferably adjacent to a lateral side of the robotic tool.

4. The robotic work tool (100) according to claim 1, wherein said at least one three-dimensional sensor arrangement (200) comprises a first and a second three-dimensional sensor arrangement (200), each of said sensor arrangements (200) comprising a respective sensor element (210) arranged in one of the body (120) and the chassis (110) and a respective detection element (220) arranged in the other of the body (120) and the chassis (110), and each of said first and second three-dimensional sensor arrangements (200) optionally being configured in accordance with any of the claims 2 or 3.

5. The robotic work tool (100) according to any of the previous claims, wherein the controller (400) is configured to receive sensor input indicating lateral and vertical movement of a sensor element (210) and a detection element (220) relative each other and, in response thereto, determine whether collision or lift has been detected by comparing sensor input with a threshold value (td).

6. The robotic work tool (100) according to any of the previous claims, comprising at least one suspension device (300) for movably supporting the body (120) on the chassis (110), the suspension device (300) comprising an elongate, rigid support member (310) having a first end (311) that is supported on the chassis (110) and a second end (312) that supports the body (120), wherein the elongate support member (310) is extendable and pivotal such that the body (120) may move laterally and vertically relative the chassis (110).

7. The robotic work tool (100) according to claim 6, wherein the first end (311) of the elongate support member (310) is configured to be pivotally supported on the chassis (110) and the second end (312) of the elongate support member (310) is joined to the body (120).

8. The robotic work tool (100) according to claims 6 or 7, wherein the elongate support member (310) comprises a base member (320) and a lift member (330), respectively configured such that at least a portion of one of the base member (320) and the lift member (330) is slidably receivable in the other of the base member (320) and the lift member (330), so that the elongate support member (310) may be extended telescopically.

9. The robotic work tool (100) according to claim 9, wherein the elongate support member (310) comprises a first biasing element (340) arranged to bias the lift member (330) towards the base member (320).

10. The robotic work tool (100) according to any of claims 7-9, wherein the suspension device (300) comprises a second biasing element (350) arranged to bias the elongate support member (310) from a pivoted position to an upright position.

11. A robotic work tool (100) according to any of the previous claims, wherein the robotic work tool (100) is a robotic lawnmower.

12. A method for use in a robotic work tool (100) comprising a chassis (110); a body (120); a controller (400) for controlling operation of the robotic work tool (100) and at least one three-dimensional sensor arrangement (200) for detecting relative movement of the body (100) and the chassis (110), wherein the sensor arrangement (200) comprises a sensor element (210) arranged in one of the body (120) and the chassis (110) and a detection element (220) arranged in the other of the body (120) and the chassis (110), the method comprising:
receiving sensor input indicating relative movement of the sensor element (210) and the detection element (220);
determining, from the sensor input, that a collision or a lift has been detected, wherein the detection element (220) is a magnet, the method being **characterized in that** the
sensor element (210) is a three-dimensional Hall sensor configured to detect the magnitude and direction in three-dimensional space of the magnetic field of the magnet, wherein the method further comprises
determining a direction of movement of the detection element (220) in a plane relative the sensor element (210), the plane being parallel to a surface being worked, and in response thereto
determining the position of the object with which the robotic work tool has collided and changing the driving path of the robotic work tool so that the robotic work tool moves away from or around the object.

## Patentansprüche

1. Robotisches Arbeitswerkzeug (100), umfassend ein Chassis (110), einen Körper (120) und eine Steuereinrichtung (400) zum Steuern des Betriebs des robotischen Arbeitswerkzeugs (100) und mindestens eine dreidimensionale Sensoranordnung (200) zum Erfassen der relativen Bewegung des Körpers (100) und des Chassis (110), wobei die Sensoranordnung (200) ein Sensorelement (210), das in einem des Körpers (120) oder des Chassis (110) angeordnet ist, und ein Erfassungselement (220) umfasst, das in dem anderen des Körpers (120) und des Chassis (110) angeordnet ist, wobei die Steuereinrichtung (400) dazu ausgelegt ist:
eine Sensoreingabe zu empfangen, die die relative Bewegung des Sensorelements (210) und des Erfassungselements (220) angibt;
aus der Sensoreingabe zu bestimmen, ob eine Kollision oder ein Anheben erkannt wurde, wobei das Erfassungselement (220) ein Magnet ist, wobei das robotische Arbeitswerkzeug **dadurch gekennzeichnet ist, dass** das Sensorelement (210) ein dreidimensionaler Hall-Sensor ist, der dazu ausgelegt ist, die Größe und Richtung des Magnetfeldes des Magneten im dreidimensionalen Raum zu erfassen, wobei die Steuereinrichtung dazu ausgelegt ist, eine Bewegungsrichtung des Erfassungselements (220) in einer Ebene relativ zu dem Sensorelement (210) zu bestimmen, wobei die Ebene parallel zu einer zu bearbeitenden Oberfläche verläuft, und als Reaktion darauf die Position des Objekts zu bestimmen, mit dem das robotische Arbeitswerkzeug kollidiert ist, und den Fahrweg des robotischen Arbeitswerkzeugs so zu ändern, dass sich das robotische Arbeitswerkzeug von dem Objekt weg oder um das Objekt herum bewegt.

2. Robotisches Arbeitswerkzeug (100) gemäß Anspruch 1, wobei das Sensorelement als eine integrierte Einheit ausgelegt und vorzugsweise in einem einzigen integrierten Schaltungsgehäuse gekapselt ist.

3. Robotisches Arbeitswerkzeug (100) gemäß einem der vorhergehenden Ansprüche, wobei die dreidimensionale Sensoranordnung in der Draufsicht in einem Abstand von einer geometrischen Mitte des robotischen Arbeitswerkzeugs (100) und vorzugsweise angrenzend an eine Lateralseite des robotischen Arbeitswerkzeugs angeordnet ist.

4. Robotisches Arbeitswerkzeug (100) gemäß Anspruch 1, wobei die mindestens eine dreidimensionale Sensoranordnung (200) eine erste und eine zweite dreidimensionale Sensoranordnung (200) umfasst, wobei jede der Sensoranordnungen (200) ein jeweiliges Sensorelement (210), das entweder im Körper (120) oder im Chassis (110) angeordnet ist, und ein jeweiliges Erfassungselement (220) umfasst, das im anderen Körper (120) oder im Chassis (110) angeordnet ist, und wobei jede der ersten und zweiten dreidimensionalen Sensoranordnung (200) gegebenenfalls gemäß einem der Ansprüche 2 oder 3 ausgelegt ist.

5. Robotisches Arbeitswerkzeug (100) gemäß einem der vorhergehenden Ansprüche, wobei die Steuereinrichtung(400) dazu ausgelegt ist, eine Sensoreingabe zu empfangen, die eine seitliche und vertikale Bewegung eines Sensorelements (210) und eines Erfassungselements (220) relativ zueinander angibt, und als Reaktion darauf durch Vergleichen der Sensoreingabe mit einem Schwellenwert (td) zu bestimmen, ob eine Kollision oder ein Anheben erfasst wurde.

6. Robotisches Arbeitswerkzeug (100) gemäß einem der vorhergehenden Ansprüche, umfassend mindestens eine Aufhängungsvorrichtung (300) zum bewegbaren Stützen des Körpers (120) auf dem Chassis (110), wobei die Aufhängungsvorrichtung (300) ein längliches, starres Stützelement (310) mit einem ersten Ende (311), das auf dem Chassis (110) gestützt wird, und einem zweiten Ende (312), das den Körper (120) stützt, umfasst, wobei das längliche Stützelement (310) ausziehbar und schwenkbar ist, sodass sich der Körper (120) seitlich und vertikal relativ zum Chassis (110) bewegen kann.

7. Robotisches Arbeitswerkzeug (100) gemäß Anspruch 6, wobei das erste Ende (311) des länglichen Stützelements (310) so ausgelegt ist, das es schwenkbar auf dem Chassis (110) gelagert ist, und das zweite Ende (312) des länglichen Stützelements (310) mit dem Körper (120) verbunden ist.

8. Robotisches Arbeitswerkzeug (100) gemäß Anspruch 6 oder 7, wobei das längliche Stützelement (310) ein Basiselement (320) und ein Hubelement (330) umfasst, die jeweils so ausgelegt sind, dass mindestens ein Abschnitt eines des Basiselements (320) und des Hubelements (330) verschiebbar in dem anderen des Basiselements (320) und des Hubelements (330) aufnehmbar ist, sodass das längliche Stützelement (310) teleskopisch ausgefahren werden kann.

9. Robotisches Arbeitswerkzeug (100) gemäß Anspruch 9, wobei das längliche Stützelement (310) ein erstes Vorspannelement (340) umfasst, das so angeordnet ist, dass es das Hubelement (330) in Richtung des Basiselements (320) vorspannt.

10. Robotisches Arbeitswerkzeug (100) gemäß einem der Ansprüche 7-9, wobei die Aufhängungsvorrichtung (300) ein zweites Vorspannelement (350) umfasst, das so angeordnet ist, dass es das längliche Stützelement (310) aus einer geschwenkten Position in eine aufrechte Position vorspannt.

11. Robotisches Arbeitswerkzeug (100) gemäß einem der vorhergehenden Ansprüche, wobei das robotische Arbeitswerkzeug (100) ein robotischer Rasenmäher ist.

12. Verfahren zur Verwendung in einem robotischen Arbeitswerkzeug (100), umfassend ein Chassis (110), einen Körper (120) und eine Steuereinrichtung (400) zum Steuern des Betriebs des robotischen Arbeitswerkzeugs (100) und mindestens eine dreidimensionale Sensoranordnung (200) zum Erfassen der relativen Bewegung des Körpers (100) und des Chassis (110), wobei die Sensoranordnung (200) ein Sensorelement (210), das in einem des Körpers (120) oder des Chassis (110) angeordnet ist, und ein Erfassungselement (220) umfasst, das in dem anderen des Körpers (120) und des Chassis (110) angeordnet ist, wobei das Verfahren Folgendes umfasst:
Empfangen von Sensoreingaben, die eine relative Bewegung des Sensorelements (210) und des Erfassungselements (220) angeben;
Bestimmen aus der Sensoreingabe, dass eine Kollision oder ein Anheben erfasst worden ist, wobei das Erfassungselement (220) ein Magnet ist, wobei das Verfahren **dadurch gekennzeichnet ist, dass** das Sensorelement (210) ein dreidimensionaler Hall-Sensor ist, der dazu ausgelegt ist, die Größe und Richtung des Magnetfeldes des Magneten im dreidimensionalen Raum zu erfassen, wobei das Verfahren ferner das Bestimmen einer Bewegungsrichtung des Erfassungselements (220) in einer Ebene relativ zum Sensorelement (210) umfasst, wobei die Ebene parallel zu einer zu bearbeitenden Oberfläche verlauft, und als Reaktion darauf
Bestimmen der Position des Objekts, mit dem das robotische Arbeitswerkzeug kollidiert ist, und Ändern des Fahrwegs des robotischen Arbeitswerkzeugs, sodass sich das robotische Arbeitswerkzeug von dem Objekt weg oder um dieses herum bewegt.

## Revendications

1. Outil (100) de travail robotique comportant un châssis (110), un corps (120) et un moyen (400) de commande servant à commander le fonctionnement de l'outil (100) de travail robotique et au moins un agencement (200) de capteur tridimensionnel servant à détecter un mouvement relatif du corps (100) et du châssis (110), l'agencement (200) de capteur comportant un élément (210) de capteur agencé dans un composant parmi le corps (120) et le châssis (110) et un élément (220) de détection agencé dans l'autre composant parmi le corps (120) et le châssis (110), le moyen (400) de commande étant configuré pour :
recevoir une entrée de capteur indiquant un mouvement relatif de l'élément (210) de capteur et de l'élément (220) de détection,
déterminer, à partir de l'entrée de capteur, si une collision ou un soulèvement ont été détectés, l'élément (220) de détection étant un aimant,
l'outil de travail robotique étant **caractérisé en ce que** l'élément (210) de capteur est un capteur tridimensionnel à effet Hall configuré pour détecter l'amplitude et la direction dans l'espace tridimensionnel du champ magnétique de l'aimant, le moyen de commande étant configuré pour déterminer une direction de mouvement de l'élément (220) de détection dans un plan par rapport à l'élément (210) de capteur, le plan étant parallèle à une surface faisant l'objet d'un travail et, en réponse à cela, déterminer la position de l'objet avec lequel l'outil de travail robotique est entré en collision et modifier le trajet de circulation de l'outil de travail robotique de telle sorte que l'outil de travail robotique s'écarte de l'objet ou contourne celui-ci.

2. Outil (100) de travail robotique selon la revendication 1, l'élément de capteur étant configuré comme une unité intégrée, et de préférence encapsulé dans un seul boîtier de circuit intégré.

3. Outil (100) de travail robotique selon l'une quelconque des revendications précédentes, l'agencement de capteur tridimensionnel étant positionné, dans une vue de dessus, à une certaine distance d'un centre géométrique de l'outil (100) de travail robotique, et de préférence adjacent à une face latérale de l'outil robotique.

4. Outil (100) de travail robotique selon la revendication 1, ledit ou lesdits agencements (200) de capteurs tridimensionnels comportant un premier et un second agencement (200) de capteur tridimensionnel, chacun desdits agencements (200) de capteurs comportant un élément respectif (210) de capteur agencé dans un composant parmi le corps (120) et le châssis (110) et un élément respectif (220) de détection agencé dans l'autre composant parmi le corps (120) et le châssis (110), et chacun desdits premier et second agencements (200) de capteurs tridimensionnels étant optionnellement configuré selon l'une quelconque des revendications 2 ou 3.

5. Outil (100) de travail robotique selon l'une quelconque des revendications précédentes, le moyen (400) de commande étant configuré pour recevoir une entrée de capteur indiquant un mouvement latéral et vertical d'un élément (210) de capteur et d'un élément (220) de détection l'un par rapport à l'autre et, en réponse à cela, déterminer si une collision ou un soulèvement ont été détectés en comparant l'entrée de capteur avec une valeur seuil (td).

6. Outil (100) de travail robotique selon l'une quelconque des revendications précédentes, comportant au moins un dispositif (300) de suspension servant à soutenir de façon mobile le corps (120) sur le châssis (110), le dispositif (300) de suspension comportant un organe (310) de soutien allongé rigide présentant une première extrémité (311) qui repose sur le châssis (110) et une seconde extrémité (312) qui soutient le corps (120), l'organe (310) de soutien allongé étant extensible et servant de pivot de telle façon que le corps (120) puisse se déplacer latéralement et verticalement par rapport au châssis (110).

7. Outil (100) de travail robotique selon la revendication 6, la première extrémité (311) de l'organe (310) de soutien allongé étant configurée pour reposer de façon pivotante sur le châssis (110) et la seconde extrémité (312) de l'organe (310) de soutien allongé étant jointe au corps (120).

8. Outil (100) de travail robotique selon les revendications 6 ou 7, l'organe (310) de soutien allongé comportant un organe (320) de base et un organe (330) de soulèvement, respectivement configurés de telle façon qu'au moins une partie d'un organe parmi l'organe (320) de base et l'organe (330) de soulèvement puisse être logée de manière coulissante dans l'autre organe parmi l'organe (320) de base et l'organe (330) de soulèvement, de telle sorte que l'organe (310) de soutien allongé puisse être déployé de manière télescopique.

9. Outil (100) de travail robotique selon la revendication 9, l'organe (310) de soutien allongé comportant un premier élément (340) de sollicitation agencé de façon à solliciter l'organe (330) de soulèvement vers l'organe (320) de base.

10. Outil (100) de travail robotique selon l'une quelconque des revendications 7 à 9, le dispositif (300) de suspension comportant un second élément (350) de sollicitation agencé de façon à solliciter l'organe (310) de soutien allongé d'une position pivotée à une position redressée.

11. Outil (100) de travail robotique selon l'une quelconque des revendications précédentes, l'outil (100) de travail robotique étant une tondeuse à gazon robotique.

12. Procédé destiné à être utilisé dans un outil (100) de travail robotique comportant un châssis (110), un corps (120) ; un moyen (400) de commande servant à commander le fonctionnement de l'outil (100) de travail robotique et au moins un agencement (200) de capteur tridimensionnel servant à détecter un mouvement relatif du corps (100) et du châssis (110), l'agencement (200) de capteur comportant un élément (210) de capteur agencé dans un composant parmi le corps (120) et le châssis (110) et un élément (220) de détection agencé dans l'autre composant parmi le corps (120) et le châssis (110), le procédé comportant les étapes consistant à :
recevoir une entrée de capteur indiquant un mouvement relatif de l'élément (210) de capteur et de l'élément (220) de détection ;
déterminer, à partir de l'entrée de capteur, qu'une collision ou un soulèvement ont été détectés, l'élément (220) de détection étant un aimant, le procédé étant **caractérisé en ce que**
l'élément (210) de capteur est un capteur tridimensionnel à effet Hall configuré pour détecter l'amplitude et la direction dans l'espace tridimensionnel du champ magnétique de l'aimant, le procédé comportant en outre les étapes consistant à déterminer une direction de mouvement de l'élément (220) de détection dans un plan par rapport à l'élément (210) de capteur, le plan étant parallèle à une surface faisant l'objet d'un travail et, en réponse à cela, déterminer la position de l'objet avec lequel l'outil de travail robotique est entré en collision et modifier le trajet de circulation de l'outil de travail robotique de telle sorte que l'outil de travail robotique s'écarte de l'objet ou contourne celui-ci.
